# EUROPEAN PATENT SPECIFICATION

(11) **EP 3 694 340 B1**
(45) Date of publication and mention of the grant of the patent: **14.01.2026**
(21) Application number: 18800788.4
(22) Date of filing: 10.10.2018
(51) Int. Cl.: A23B 2/733, A23B 2/754

(54) **PROCESS FOR PRODUCING ANTIMICROBIAL POWDERED COMPOSITIONS**
VERFAHREN ZUR HERSTELLUNG ANTIMIKROBIELLER PULVERZUSAMMENSETZUNGEN
PROCÉDÉ DE PRODUCTION DE COMPOSITIONS ANTIMICROBIENNES EN POUDRE

(30) Priority: 10.10.2017 US 201762570313 P
(43) Date of publication of application: 19.08.2020
(73) Proprietor: Kerry Group Services International Limited, Tralee Co. Kerry (IE)
(72) Inventor: KLATT, Jennifer Jean, South Beloit Illinois 61080 (US); COOPER, Renetta, Elkhorn Wisconsin 53121 (US); LANDORF, Angela Krystine, Beloit Wisconsin 53511 (US); SHEEHAN, Vivien M., Roscoe Illinois 61073 (US); LU, Yingshuang, Beloit Wisconsin 53511 (US); MAEGLI, Jack William, Beloit Wisconsin 53511 (US)
(74) Representative: Bird & Bird Società tra Avvocati S.r.l.
(86) International application number: PCT/US2018/055153
(87) International publication number: WO 2019/075016

(56) References cited:
- EP-A2- 0 838 161
- US-A1- 2015 225 683
- US-A1- 2017 107 468
- "Insulators for Icing and Polluted Environments", 26 October 2009, JOHN WILEY & SONS, INCORPORATED, ISBN: 978-0-470-49624-4, article FARZANEH MASOUD ET AL: "ENVIRONMENTAL EXPOSURE OF INSULATORS - Chapter 3", pages: 59 - 154, XP093148967
- ANONYMOUS: "Verdad Avanta C100 - Product Data", 27 June 2017 (2017-06-27), https://www.ulprospector.com, pages 1 - 1, XP055531815, Retrieved from the Internet <URL:https://www.ulprospector.com/documents/1422223.pdf?bs=882&b=646923&st=20&r=eu&ind=food> [retrieved on 20181207]
- AMANDA M. KING ET AL: "Impact of Clean-Label Antimicrobials and Nitrite Derived from Natural Sources on the Outgrowth of Clostridium perfringens during Cooling of Deli-Style Turkey Breast", JOURNAL OF FOOD PROTECTION, vol. 78, no. 5, 1 May 2015 (2015-05-01), US, pages 946 - 953, XP055531194, ISSN: 0362-028X, DOI: 10.4315/0362-028X.JFP-14-503

## Description

### TECHNICAL FIELD

The present invention relates to a process of producing a stable antimicrobial powder and to the use of a hygroscopic ingredient for enhancing the shelf stability of an antimicrobial powder.

### BACKGROUND

In today's world of back to basic cooking, it is desired to have a clean label antimicrobial component to replace the chemical preservatives and nitrate/nitrites conventionally used in processed foods. It is additionally desired to have such antimicrobials in stable, dry form for simplified storage, long shelf life, and ease of application.

To this end, spray drying or drum drying are simple, cost effective, and hence preferred methods of manufacture. Unfortunately, since most of such antimicrobial compounds are thermoplastic or hygroscopic, they require a "carrier" to be dried into powdered form. These carriers are usually undesirable in that they needlessly complicate the food product, look bad on the label, and serve no positive purpose to the end food product. Non-limiting examples of such carriers include maltodextrin, com syrup, gums, and proteins.

One example of this instability and the requirement of a carrier can be seen when vinegar that has been partially neutralized, such as to sodium acetate, is spray dried without a carrier. Drying under such conditions causes the neutralized vinegar to dry into an unstable and hygroscopic anhydrous glassy phase. This resultant powder rapidly absorbs moisture, reverting to the more stable sodium acetate tri-hydrate crystal structure, and forming a sticky lump that is unusable in food processing.

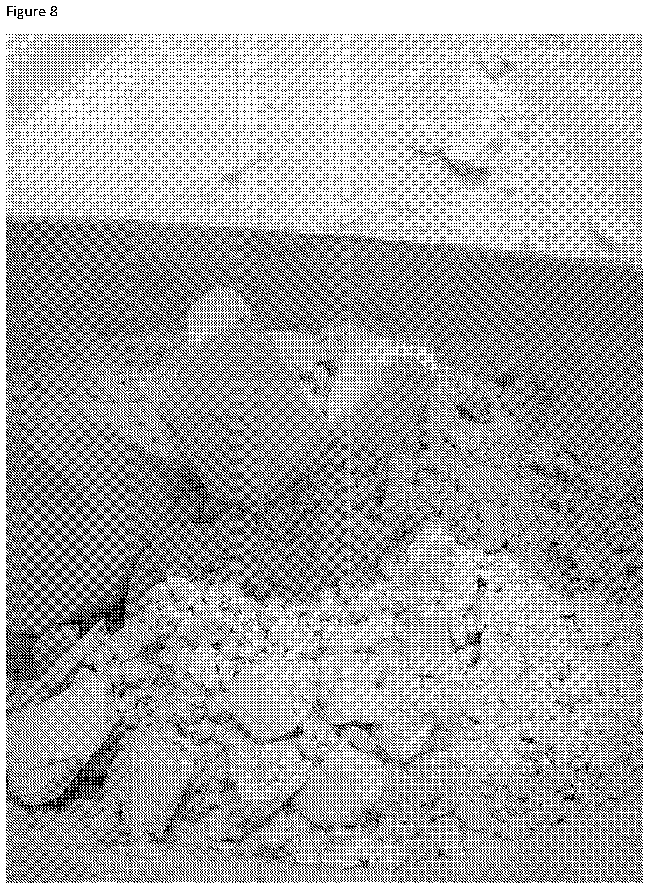

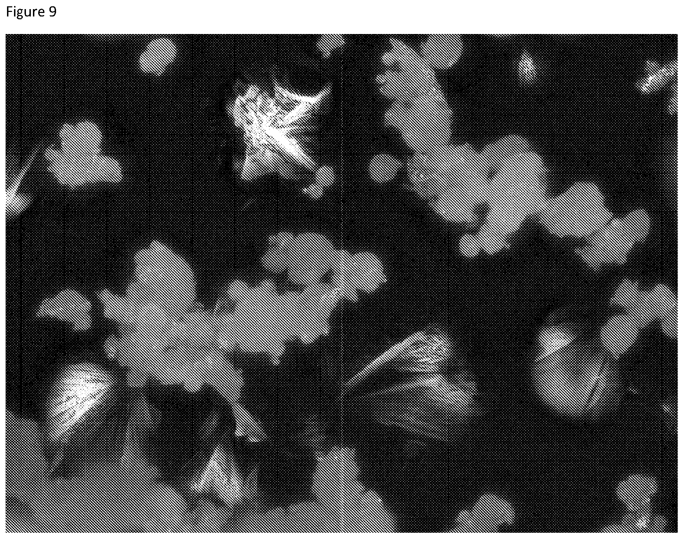

Figures 8 and 9 demonstrate this instability. Figure 8 shows a bag of neutralized vinegar powder (sodium acetate), which has formed a large lump due to conversion of the sodium acetate from the anhydrous glassy phase to the tri-hydrate crystal phase. Figure 9 is a microscopic view (40X) under semi-polar light showing the darker anhydrous sodium acetate powder turning into the tri-hydrate crystal form (bright crystals), which bond particles to each other (and in this case the glass slide).

As another example of this instability, cultured celery juice solids when dried without a carrier will coat the inside of a spray dryer as a sticky film. The melt point of the cultured celery juice solids is below the practical exhaust drying temperatures used in spray drying. Deep vacuum drying can be used to convert cultured celery juice solids to a dry form, since the temperatures used are below the melt point of the cultured celery juice solids. However, deep vacuum drying converts the cultured celery juice solids into the glass phase, which is even more hygroscopic than the anhydrous glassy phase of vinegar. The result of this drying process is an extremely hygroscopic and difficult to handle product. Moreover, due to the product's relatively high salt concentration and low concentration of protein / carbohydrate, it is financially impractical to freeze dry this product without adding carriers.

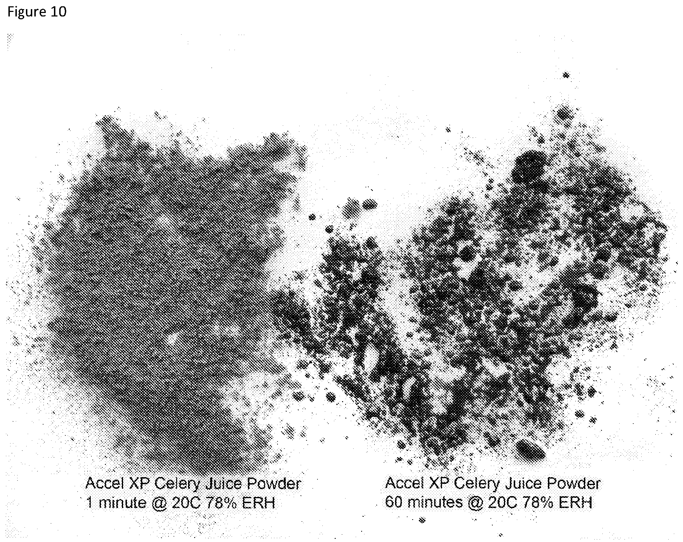

Figure 10 provides a side-by-side comparison of vacuum dried celery juice before and after exposure to ambient 20°C air at 78% equilibrium relative humidity for one hour. As shown, carrier-free vacuum dried celery product quickly absorbs moisture, turning into a syrup and then a liquid, becoming unusable.

An additional method for converting such liquid antimicrobials to a powder form includes plating the liquid onto a plating salt, such as Cargill Alberger process salt or Morton dendritic salt. However, such plating salts can only hold 5-10% liquid material without losing the flow properties that make powders desirable. Accordingly, such processing adds an extreme amount of carrier to the finished product to get an efficacy dose of antimicrobial, rendering the product undesirably high in sodium.

Alternatively, porous silica salt may be used for plating liquid antimicrobials to a powder form. However, while such silicas can hold up to 2 time their weight while maintaining flow, they are synthetic and non-digestible, defeating the objective of having a natural product.

As another alternative for forming a dried neutralized vinegar (sodium acetate), U.S. Patent Application Number 14/418,396 discloses a multi-step method of spraying acetic acid onto hygroscopic anhydrous sodium acetate glassy amorphous form in a high shear blender in a ratio that converts the particles to the more stable trihydrate crystal form. While this product is purported to have enhance stability, the resultant pure tri-hydrate crystals melt at the low temperature of 58°C and thus require controlled environmental (thermal) storage. Additionally, this neutralized vinegar product cannot accommodate the inclusion of other hygroscopic components, such as nitrite containing cultured celery juice concentrate, at an effective level, since the additional moisture would melt the tri-hydrate crystals.

US2015225683 provides a powdered vinegar that comprises partly neutralized vinegar, i.e. vinegar derived acid that is partly neutralized with e.g. sodium and/or potassium hydroxide, and free vinegar derived acid. US2017107468 is directed to a process for making a concentrated vinegar product by simple evaporation, which concentrated vinegar product can also be used as intermediate in the production of products that can be listed on food labels as "vinegar". EP0838161 relates to food colorants, and more particularly, it relates to a red colorant obtained from beets as a stabilized beet colorant composition. King et al. (2015) suggests using clean-label antimicrobials can provide for safe cooling following the study parameters, and greater inhibition of C. perfringens may exist when antimicrobials are used with nitrite.

More desirably, the objective of this disclosure is to stabilize a low molecular weight antimicrobial organic acid product, such as a neutralized vinegar, in combination with a hygroscopic ingredient, such as nitrite containing cultured celery juice, and in a stable crystal form. The invention is determined by the claims.

### OVERVIEW

When rapidly drying a solution of neutralized vinegar, such as sodium acetate, by known methods (e.g., spray drying, drum drying, or the equivalent), the resultant powder primarily contains anhydrous glassy form of the sodium acetate. The normal minimal temperatures used for such drying processes of 225°C inlet and 90°C exhaust are above the 58° melt point of the lowest free energy and hygrosopically stable tri-hydrate crystal form. While this produces an initially dry powder, the anhydrous glassy form is very hygroscopic and quickly absorb environmental humidity, converting to the more stable tri-hydrate crystal form at room temperature (20°C) storage.

Likewise, as discussed herein, other hygroscopic ingredients, such as cultured celery juice, are not dry able by previously known drying methods without a carrier.

The problems and disadvantages associated with conventional antimicrobial powders and methods for preparing the same are overcome by the present invention. Contrary to such understandings in the art as to the instability of these components, the inventors have produced an unexpectedly stable antimicrobial powder composition made up of these unstable low molecular weight antimicrobial organic acid (e.g., neutralized vinegar) and hygroscopic ingredients, without the requirement of any stabilizing carriers.

The antimicrobial powder compositions of the present disclosure are prepared by combining a hygroscopic ingredient (cultured celery juice) and a low molecular weight antimicrobial organic acid (sodium acetate) to form a liquid slurry composition and then drying the liquid slurry composition to produce an antimicrobial powder, thus co-drying the low molecular weight antimicrobial organic acid and hygroscopic ingredient.

The inventors discovered that two highly unanticipated events happened in this execution. First, the resultant crystal structure of the low molecular weight antimicrobial organic acid (sodium acetate) had enough surface area to accommodate the hygroscopic ingredient without melting. Second, the resulting crystal structure of the low molecular weight antimicrobial organic acid both included enough of the anhydrous form to allow high temperature drying as well as enough of hygroscopically stable hydrate form to exhibit enhanced shelf stability.

The low molecular weight antimicrobial organic acid in the antimicrobial powder may be present in a glassy-crystal phase of both anhydrous and hydrate forms in a ratio of about 1:5 to 5:1 parts w/w anhydrous form to hydrate form, preferably about 1:2 parts w/w anhydrous form to hydrate form. Moreover, it was discovered by the inventors of this application that the antimicrobial powder when stored at a temperature of about 20°C and about a 70% equilibrium relative humidity for at least 6 months has a water content of no more than about 5%.

Thus, the unexpected resulting blend of low molecular weight antimicrobial organic acid crystals allowed a novel combination of economical drying and shelf stability. It is believed that the hygroscopic ingredient either reduces the evaporation rate of the atomized particles enough to result in a higher moisture particulate that donates water to form tri- hydrate crystals in the cooling section of the spray dry fluid bed, or, alternatively, the hygroscopic ingredient may originally desiccate to the higher moisture containing "glassy or rubbery phase," which upon cooling donates enough moisture to the anhydrous low molecular weight antimicrobial organic acid glassy amorphous form to convert to the tri- hydrate crystal form. Either way, formation of tangible amounts of the desirable hydrate crystal requires the presence of the otherwise difficult to dry hygroscopic ingredient (e.g., cultured celery juice). The type of hydrate crystal formed in the antimicrobial powder can depend on the low molecular weight antimicrobial organic acid. As one example, in a preferred embodiment the use of sodium acetate in combination with a hygroscopic ingredient according to the process disclosed herein produces a tri-hydrate crystal form. Other salts of low molecular weight antimicrobial organic acid can result in different hydrate crystal forms. For example, potassium acetate can produce a 1.5 hydrate crystal form.

The hygroscopic ingredient and the low molecular weight antimicrobial organic acid may be combined in a weight ratio of about 1:100 to about 100:100 w/w hygroscopic ingredient solids to organic acid solids.

The antimicrobial powder may include a specified amount of a carrier, such as maltodextrin, com syrup, gums, and proteins. Certain embodiments include less than about 91% of a carrier. Other embodiments include less than about 50% of carrier. In yet other embodiments, the composition does not include a carrier.

The method of preparing antimicrobial compositions may include a step prior to drying of adjusting the pH of the liquid slurry composition to a value between about 4. 0 and 10. 0, heating the liquid slurry composition at a temperature between about 4.4°C (40°F) and about 82.2°C (180°F), and maintaining the temperature until the liquid slurry composition has a dissolved percent organic acid solids (e.g., acetate-acetic acid solids) in the range of about 5-70%.

In the process and use according to the present invention, the low molecular weight antimicrobial organic acid is sodium acetate.

In the process and use according to the present invention, the hygroscopic ingredient is cultured celery juice.

The methods of preparing antimicrobial powder compositions may also include steps of packaging the antimicrobial powder in a container. The packaged antimicrobial composition can include salt, flow agents and other carriers known in the art.

The antimicrobial powder compositions may be combined with one or more edible or potable ingredients to preserve a foodstuff or a beverage. In certain embodiments, the antimicrobial powder is contained in an amount of between about 0. 1% to about 5% by weight of the edible or potable ingredient.

### FIGURES

Figure 1 is a differential scanning calorimeter (DSC) scan of a sodium acetate anhydrous glassy amorphous standard.
Figure 2 is a DSC scan of a sodium acetate tri-hydrate crystal standard
Figure 3 is a DSC scan of a spray dried neutralized vinegar.
Figure 4 is a DSC scan of a spray dried neutralized vinegar-11% cultured celery juice concentrate.
Figure 5 is a DSC scan of a spray dried neutralized vinegar-26% cultured celery juice concentrate.
Figure 6 is a macroscopic time elapse comparison of spray dried neutralized vinegar and co-dried neutralized vinegar and cultured celery juice solids solution.
Figure 7 is a microscopic time elapse comparison of spray dried neutralized vinegar and co-dried neutralized vinegar and cultured celery juice solids solution.
Figure 8 is a photograph of a bag of dry neutralized vinegar powder (sodium acetate) that has formed a large lump due to sodium acetate crystal conversion from anhydrous to tri-hydrate.
Figure 9 is a microscopic view (40X) under semi-polar light showing the darker anhydrous sodium acetate powder turning into tri-hydrate crystal form (bright crystals), which bond particles to each other.
Figure 10 is a side-by-side comparison of vacuum-dried celery juice before and after exposure to ambient 20°C air at 78% equilibrium relative humidity for one hour
Figure 11 is a side-by-side comparison of vacuum dried cultured celery product (left) and 24% celery solids juice dried with buffered vinegar (right) under 75% equilibrium relative humidity for 48 hours.
Figure 12 is a side by side comparison of vacuum dried cultured celery product (right) and 24% celery solids juice dried with buffered vinegar (left) under 75% equilibrium relative humidity for 96 hours.

### DETAILED DESCRIPTION

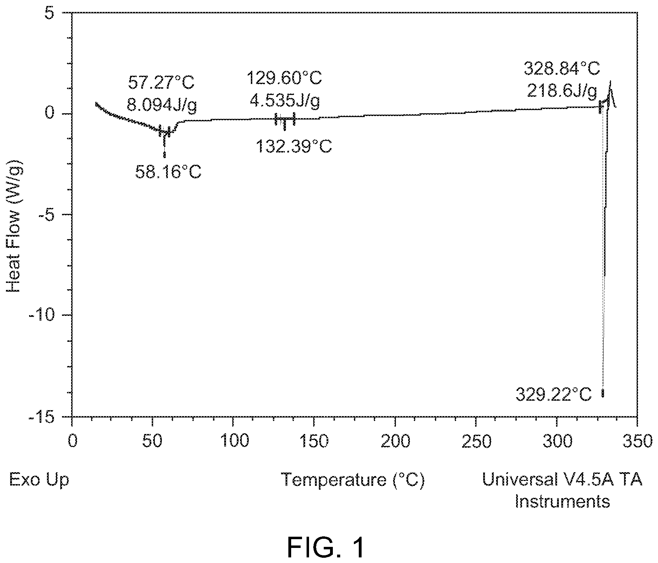

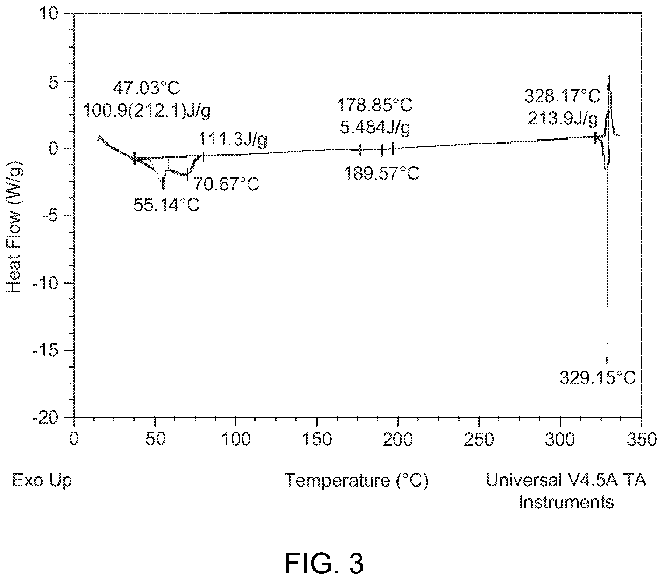

There is disclosed herein antimicrobial powder compositions and methods of producing and using the same. As can be seen by comparison of the Fig. 1 DSC scan of a sodium acetate anhydrous glassy amorphous form standard and the Fig. 3 DSC scan of a spray dried neutralized vinegar (sodium acetate), spray drying a solution of neutralized vinegar results in most all sodium acetate anhydrous glassy amorphous form and no measurable tri- hydrate crystals.

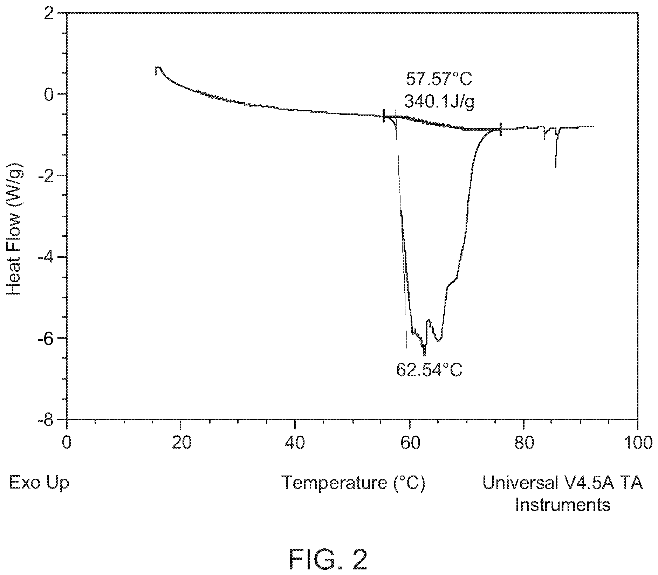

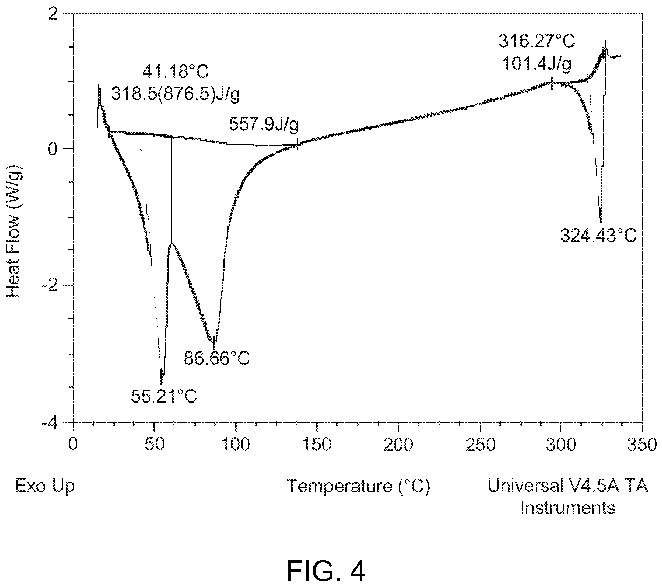

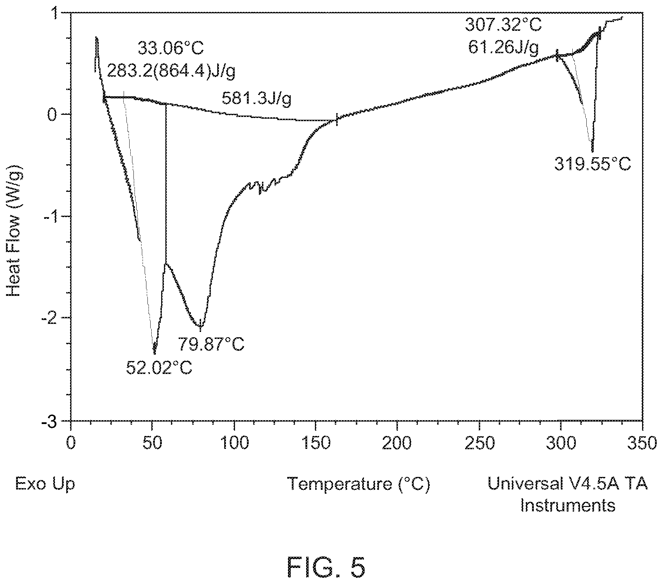

As can be seen by comparison of the Fig. 2 DSC scan of a sodium acetate tri- hydrate crystal standard with Figs. 4, 5 DSC scans of a spray dried neutralized vinegar with 11% and 26% cultured celery juice concentrate, unexpectedly, co-drying a solution of a low molecular weight antimicrobial organic acid (e.g., sodium acetate) and a hygroscopic ingredient (e.g., cultured celery juice concentrate) results in a distinct composition that includes both hydrate crystal form and anhydrous glassy amorphous form.

In the preferred example where sodium acetate is the low molecular weight antimicrobial organic acid, the sodium acetate is in the predominant preferred tri-hydrate crystal form, but with enough anhydrous glassy amorphous form to render the product capable of being dry processed in a spray-drum dryer, where the drying chamber temperature is well above the 58°C melt point of the tri-hydrate crystal. The antimicrobial powder compositions may contain at least about 20% anhydrous glassy amorphous form w/w on a total organic acid (e.g., sodium acetate) crystal basis for dryability, and at least about 20% hydrate crystal form w/w on a total organic acid crystal basis for shelf stability. In one embodiment, the neutralized vinegar in the antimicrobial powder may be at least about 50% tri-hydrate crystal form w/w on a total neutralized vinegar crystal basis for shelf stability. The low molecular weight anti-microbial organic acid in the antimicrobial powder may be about 80% hydrate crystal form w/w on a total organic acid crystal basis for shelf stability. The antimicrobial composition may contain the low molecular weight antimicrobial organic acid in a glassy-crystal phase of both anhydrous and hydrate forms in a ratio of about 1:5 to 5:1 parts w/w anhydrous form to hydrate form, preferably about 1:2 parts w/w anhydrous form to hydrate form. In one preferred example, the antimicrobial powder composition contains sodium acetate in a glassy-crystal phase of both anhydrous and tri-hydrate forms in a ratio of about 1:5 to 5:1 parts w/w anhydrous form to tri-hydrate form, preferably about 1:2 parts w/w anhydrous form to tri-hydrate form.

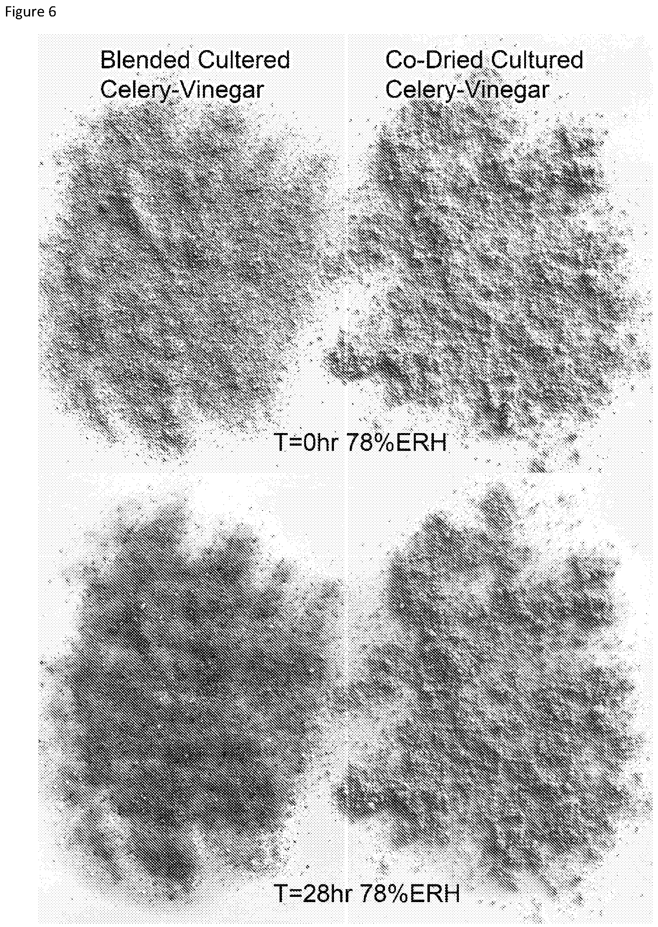

To demonstrate the advantages of the co-dried multiple component anti-microbial disclosure, a comparison was made to the same composition with independently dried components that were blended after drying, as is currently practiced in the art. Fig. 6 shows the result of leaving these two samples on a sheet of white paper at a temperature of 20°C and 78% equilibrium relative humidity for a period of 28 hours. As can be seen in Fig. 6, the blend of independently dried components on the left absorbed water and became syrup-like, so much so that the paper underneath became wet and wrinkled. On the other hand, the co-dried product of the present disclosure on the right remained in a usable powder form.

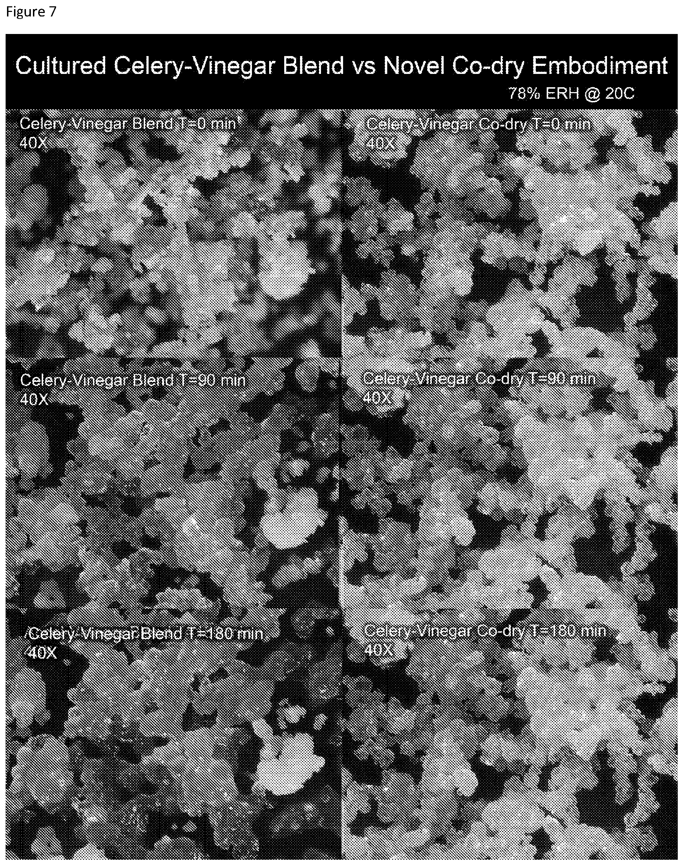

This behaviour can be seen in closer view with the microscopic images of Fig. 7. The time elapse images on the left shows a 40X view of the particles in the blend of independently dried components at a temperature of 20°C and 78% equilibrium relative humidity for 180 minutes from top to bottom, compared to the time elapse images on the right of the co-dried product of the present disclosure under the same conditions. As can be seen, the particles on the left became melted and fused, whereas the particles of the co-dried product of the present disclosure on the right maintained their singularity and flowability.

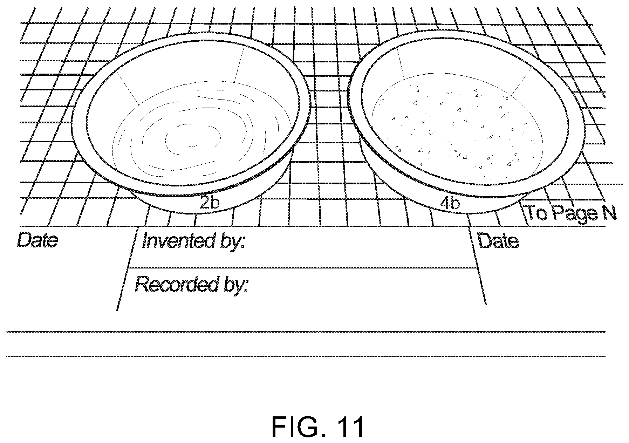

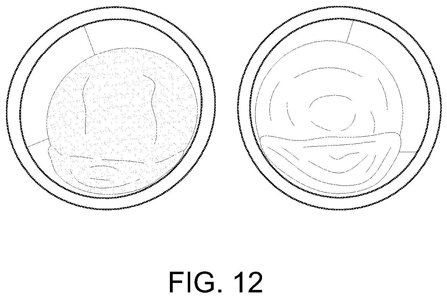

As yet further demonstrations of advantages of the co-dried antimicrobial powder composition, Figs. 11 and 12 compare cultured celery products and co-dried 24% celery solids juice dried with neutralized vinegar (sodium acetate).

Fig. 11 depicts vacuum dried cultured celery product (left) versus 24% celery solids juice dried with neutralized vinegar (right) under 75 % relative humidity at 22°C for 48 hours. The results indicate that vacuum dried cultured celery product is highly hygroscopic compared to 24% celery solids juice co-dried with neutralized vinegar at 48 hours. The moisture induced phase transition of vacuum dried cultured celery product indicates the poor shelf stability under the tested conditions.

Fig. 12 depicts 24% celery solids juice co-dried with neutralized vinegar (sodium acetate) (left) versus vacuum dried cultured celery product (right) under 75 %relative humidity at 22°C for 96 hours. The results indicate that the co-dried multiple component antimicrobial powder composition of the disclosure was only partially liquefied, as shown by the crystalline materials remaining at the end of storage. On the other hand, vacuum dried cultured celery product became completely pourable by the end of the 96-hour testing period.

As can be seen from the above, the co-dried multiple component antimicrobial powder composition of the disclosure has an advantageous shelf life over a dry blended composition of the separately processed ingredients, as well as vacuum dried cultured celery product alone. This embodiment of the disclosure without any carrier offers a tremendous improvement to a carrier-free (vacuum dried) version of cultured celery juice.

The neutralized vinegars may be purchased from commercial sources or prepared by buffering a vinegar composition with a neutralizing agent. The vinegar composition may be in a liquid or powder form. Examples of vinegars that may be used in the present process include malt vinegar, wine vinegar, sherry vinegar, apple cider vinegar, fruit vinegars, rice vinegar, and combinations thereof.

The neutralized vinegar may be prepared through the addition of a neutralizing agent to a vinegar composition to adjust the pH of the vinegar composition to a value within the range of about 4.0 to 8.0. The pH of the vinegar composition may be adjusted to a value of about 4.5 to 7.0. The pH of the vinegar composition may be adjusted to a value of about 5.0 to 6.0. Similar preferred pH ranges would likewise apply to other low molecular weight antimicrobial organic acids discussed herein.

The neutralizing agent for adjusting the pH of the low molecular weight antimicrobial organic acids is selected from the group consisting of sodium hydroxide, potassium hydroxide, magnesium hydroxide, calcium hydroxide, sodium (bi)carbonate, potassium (bi)carbonate, and mixtures thereof.

In addition to cultured celery juice, other hygroscopic ingredients may be substituted, whether or not they have anti-microbial properties. For example, such hygroscopic ingredients include other hygroscopic vegetable juices, cultured or not, such as carrot, cabbage, tomato, or the like; non vegetable hygroscopic ingredients, such as high DE com syrup, dextrose, arabinose, amino acids, short peptides, protein hydrolysates, honey, or the like; and hygroscopic fruit juices such as orange, blueberry, pineapple or the like.

The hygroscopic ingredients may be cultured using strains, including but not limited to, Micrococcus, Kocuria Staphylococcus, Lactobacillus, Lactococcus, Streptococcus, Pedio-coccus, Leuconostoc, Propionibacterium, Xanthomonas, Bifidobacterium, Acetobacter, Bacillus coagulans, Enterococcus and combinations thereof.

Metabolites of the components can include organic acids or salts thereof. Such examples include glycolic, hydroxyacetic, lactic, propionic, acetic, sorbic, formic, propanoic, butyric, valeric, adipic, gluconic, glycolic, malic, fumaric, citric, tartaric, ascorbic, salicylic, benzoic, or carnosic), nitrite salts, peptides, botanicals, extracts, enzymes or a mixture thereof.

The compositions of the disclosure can include one or more additives, such as one or more of an antimicrobial compound, a surfactant, a pH adjusting agent, a cryoprotectant, antifoaming agent, a chelating and thickening ingredient.

Compositions of the disclosure can include less than about 91% of a carrier. As used herein, such carriers include those known in the art, including but not limited to maltodextrin, com syrup, gums, proteins, etc. The composition may include less than about 50% of carrier. The composition may not include a carrier.

Non-limiting processing conditions for obtaining the aforementioned product combination of low molecular weight antimicrobial organic acids (sodium acetate) and hygroscopic ingredient (celery juice) can include conditions as provided below.

Preparation of the liquid slurry composition:
Prepare a solution by combining between about 1 to 100 parts of a hygroscopic ingredient (on a dry w/w basis), such as celery juice solids, to 100 parts of neutralized vinegar solids or other low molecular weight antimicrobial organic acid, such as sodium acetate-acetic acid solids, at a total dissolved solids of between about 5 and 70 (w/w) percent in water. The liquid slurry composition may be prepared by combining between about 1 to 50 parts of a hygroscopic ingredient (on a dry w/w basis) to 100 parts of neutralized vinegar solids or other low molecular weight antimicrobial organic acid. In a preferred embodiment, the liquid slurry composition includes between about 10% to 30% (w/w) hygroscopic ingredient and about 70% to 90% (w/w) neutralized vinegar. In one preferred example, the liquid slurry composition includes about 25% (w/w) hygroscopic ingredient and about 75% (w/w) neutralized vinegar. Again, the foregoing percentages are on a dry w/w basis of the final antimicrobial powder composition.

After preparing the liquid slurry composition, the temperature of the slurry is adjusted to between about 4.4 °C (40 °F) to 82.2 °C (180 °F); preferably about 54.4 °C (130 °F), so as to attain a high dissolved percent organic acid solids (e.g., acetate-acetic acid solids), without being so hot as to volatilize significant amount of organic acid (e.g., acetic acid). The liquid slurry composition may be heated until the composition has a dissolved percent acetate- acetic acid solids in the range of about 5-70%. The liquid slurry composition may be heated until the composition has a dissolved percent acetate-acetic acid solids in the range of about 20-50%. The liquid slurry composition may be heated until the composition has a dissolved percent acetate-acetic acid solids in the range of about 25-35%. The liquid slurry composition may be heated until the composition has a dissolved percent acetate-acetic acid solids of about 30%. The pH of the resultant liquid slurry composition can be adjusted to between about 4.0 to 10.0; preferably to about 5.8.

Co-drying the liquid slurry composition:
Exemplary processes for drying the liquid slurry composition can include
spray drying the liquid slurry through an APV or Niro Minor type convective dryer with inlet temperature of between about 104.4-287.8 °C (220-550 °F) and adjust product feed rate so as to maintain an exhaust temperature of between about 54.4-98.9 °C (130-210 °F). The product may be fed through a hydraulic pressure atomizing nozzle operating at between about 689476 and 6.89xl07 Pa (100 and 10,000 psi) (preferably 1.7xl07 Pa (2500 psi)), or an air atomizing nozzle operating at a product pressure of between about 0 and 275790 Pa (0 and 40 psi) and an air pressure of between about 68947.6 and 1.72xl06 Pa (10 and 250 psi) (preferably 0 and 241317 Pa (0 and 35 psi) respectively), or a centrifugal atomizing wheel operating at between about 10,000 and 50,000 RPM (preferably 20,000 RPM).

Another exemplary drying process includes drum drying the liquid slurry with a Buf-flovac type dryer with a surface temperature of between about 107.2-260 °C (225-500 °F) (preferably 162. 8°C (325 °F)), and a residence time of between about 5 and 90 seconds (preferably 30 seconds).

Yet another exemplary drying process includes vacuum or freeze drying the liquid slurry in a tray or belt dryer at a pressure of between about 6.7 and 9332.6 Pa (0.05 and 70 mm mercury) (preferably 40-533.3 Pa (0.3 - 4 mm mercury)) with a tray or belt temperature of initially about 0 -37.8 °C ( 0 - 100 °F) (preferably -9.4°C (15 °F)), and increasing temperature to a value of between about 10- 93.3°C (50-200 °F) (preferably 54.4°C (130 °F)) at the end of process. Window refractance and infrared drying are yet further drying processes according to alternative embodiments.

After drying, the resulting powder or flakes can be collected by sifting through a mesh screen, such as a 2 mm (US#10) mesh screen, or equivalent methods to remove lumps.

The final composition is packaged in an appropriate container per intended quantity of use. For example, a container may have 2 mil or thicker polyethylene liner to deter absorption of humidity from environment.

In one preferred example, a mixture of about 25% w/w cultured celery juice solids and about 75% w/w sodium acetate neutralized vinegar in solution is dried by one of spray drying, drum drying, vacuum drying or freeze drying. This drying process provides a powder composition of sodium acetate in a glassy-crystal phase of both the thermally stable (to spray drying) anhydrous form and the non-hygroscopic (shelf stable) tri-hydrate crystal form in a ratio of about 1:2 parts w/w anhydrous to tri-hydrate and a bound form of the cultured celery juice, which has enhanced stability to hygroscopic melt degradation.

In another preferred example, an antimicrobial powder composition is provided that is free from conventionally used encapsulating materials (carriers). The antimicrobial powder composition includes a neutralized vinegar in a glassy-crystal phase of both the thermally stable (to spray drying) anhydrous form and non-hygroscopic (shelf stable) hydrate crystal form in a ratio of between about 1:5 to 5:1 parts w/w anhydrous to hydrate and preferably in a ratio of between about 1:2 parts w/w anhydrous to hydrate. The antimicrobial powder composition further includes a nitrite or nitrate containing cultured or non-cultured celery juice concentrate distributed between or within the neutralized vinegar glassy-crystals in a ratio of between about 1:100 and 100:100 parts cultured or non- cultured celery juice solids (on a dry w/w basis) to neutralized vinegar solids (on a dry w/w basis), preferably 1:100 to 50:100 parts w/w cultured or non-cultured celery juice solids to neutralized vinegar solids. The antimicrobial of this embodiment provides a flowable shelf stable powder.

The co-dried powder composition of low molecular weight antimicrobial organic acid and a hygroscopic ingredient may have a pH in the range of between about 3.5 to 12. The co-dried powder composition may have a pH in the range of between about 6.5 to 8.0. The co-dried powder composition may have a pH of about 7.0.

The disclosed co-processed powder compositions can be stored under different conditions, including atmospheric conditions, under vacuum, or MAP packaged.

The disclosed co-dried powder compositions are suitable for use in a range of food, beverage and personal care applications. Such applications include, but are not limited to, meat, seasoning, refrigerated salad, beverage, dressing, spread, sauce, dip, filling, marinade and dairy. In these embodiments, the co-processed powder composition can be added by various methods, such as direct addition.

By way of example, the co-processed powder composition can be directly added to a substrate at an application rate of about 0.1 - 5% on a w/w basis to substrate. In such applications, the co-processed powder composition inhibits or delays the outgrowth of spoilage and pathogenic microorganisms, such as E. coli, Staphylococcus, Campylobacter, Salmonella, yeast, mold, bacillus, LAB as well as Clostridium species and Listeria monocytogenes.

### EXAMPLES

The following examples have been included to illustrate the presently disclosed subject matter. Certain aspects of the following examples are described in terms of techniques and procedures found or contemplated by the present inventors to work well in the practice of the presently disclosed subject matter. These examples illustrate standard practices of the inventors.

### Example 1

11% cultured celery juice powder:

| **TABLE 1** | | | | |
|---|---|---|---|---|
| **Component** | **Qty (grams)** | **RM % TS** | **Solids (g)** | **% SB** |
| **Buffered Vinegar Powder** | 2,100.50 | 98 | 2058.49 | 89% |
| **Cultured Celery Juice** | | | | |
| **Concentrate** | 623.7 | 42.61 | 265.75857 | 11% |
| **Water** | 2,722.90 | | | |
| **TOTAL** | 5,447.10 | | 2,324.25 | |
| **Batch % solids** | 43% | | | |

In the amounts provided in Table 1, vinegar powder buffered with sodium to a pH of 5.8 was combined with cultured celery juice in water to form a liquid slurry composition having a pH of 6.78. The liquid slurry composition was subsequently heated to a temperature of 54.4°C (130°F) until the liquid slurry composition had a dissolved percent acetate- acetic acid solids of about 27%, as measured in the liquid.

The liquid slurry composition was fed into a spray dryer, such as an APV "Minor", and an exhaust temperature of about 87.8°C (190°F) was maintained with a constant inlet air temperature of about 176.7°C (350°F) for about 30 minutes.

The resultant powder was collected after the dryer cooled to about 54.4°C (130°F).

### Example 2

25% cultured celery juice powder:

| **TABLE 2** | | | | |
|---|---|---|---|---|
| **Component** | **Qty (LB)** | **RM % TS** | **Solids (LB)** | **% SB** |
| **Buffered Vinegar Powder** | 4.01 | 98 | 3.928268767 | 76% |
| **Cultured Celery Juice** | | | | |
| **Concentrate** | 2.89 | 42.61 | 1.231731233 | 24% |
| **Water** | 5.10 | | | |
| **TOTAL** | **12.00** | **LB** | 5.16 | |
| **Batch % solids** | **43%** | | | |

In the amounts provided in Table 2, vinegar powder buffered with sodium to a pH of 5.8 was combined with cultured celery juice in water to form a liquid slurry composition having a pH of 7.00. The liquid slurry composition was subsequently heated to a temperature of 54.4°C (130°F) until the liquid slurry composition has a dissolved percent acetate- acetic acid solids of about 23%, as measured in the liquid.

The liquid slurry composition was fed into a spray dryer, such as an APV "Minor", and an exhaust temperature of about 87.8°C (190°F) was maintained with a constant inlet air temperature of about 176.7°C (350°F) for about 30 minutes.

### The resultant powder was collected after the dryer cooled to about 54.4°C (130°F).

As can be appreciated by a person of ordinary skill in the art, other similar convective or conductive forms of drying could be employed, such as drum drying or flash drying.

## Claims

1. A process of producing a stable antimicrobial powder, the process comprising the steps of combining a hygroscopic ingredient and sodium acetate in an aqueous solution to obtain a liquid slurry composition and drying the liquid slurry composition to produce an antimicrobial powder, wherein the hygroscopic ingredient is cultured celery juice.

2. Use of a hygroscopic ingredient for enhancing the shelf stability of an antimicrobial powder, the use comprising combining the steps of combining a hygroscopic ingredient and a sodium acetate in an aqueous solution to obtain a liquid slurry composition and drying the liquid slurry composition to produce an antimicrobial powder, wherein hygroscopic ingredient is cultured celery juice.

## Patentansprüche

1. Verfahren zur Herstellung eines stabilen antimikrobiellen Pulvers, wobei das Verfahren die Schritte zum Kombinieren eines hygroskopischen Bestandteils und Natriumacetat in einer wässrigen Lösung, um eine flüssige Aufschlämmungszusammensetzung zu erhalten, und zum Trocknen der flüssigen Aufschlämmungszusammensetzung, um ein antimikrobielles Pulver herzustellen, umfasst, wobei der hygroskopische Bestandteil kultivierter Selleriesaft ist.

2. Verwendung eines hygroskopischen Bestandteils zur Verbesserung der Lagerstabilität eines antimikrobiellen Pulvers, wobei die Verwendung das Kombinieren der Schritte zum Kombinieren eines hygroskopischen Bestandteils und eines Natriumacetats in einer wässrigen Lösung, um eine flüssige Aufschlämmungszusammensetzung zu erhalten, und zum Trocknen der flüssigen Aufschlämmungszusammensetzung, um ein antimikrobielles Pulver herzustellen, umfasst, wobei der hygroskopische Bestandteil kultivierter Selleriesaft ist.

## Revendications

1. Procédé de production d'une poudre antimicrobienne stable, le procédé comprenant les étapes de la combinaison d'un ingrédient hygroscopique et d'acétate de sodium dans une solution aqueuse pour obtenir une composition de pâte liquide et le séchage de la composition de pâte liquide pour produire une poudre antimicrobienne, dans lequel l'ingrédient hygroscopique est le jus de céleri de culture.

2. Utilisation d'un ingrédient hygroscopique pour l'amélioration de la durée de conservation d'une poudre antimicrobienne, l'utilisation comprenant la combinaison des étapes de la combinaison d'un ingrédient hygroscopique et d'un acétate de sodium dans une solution aqueuse pour obtenir une composition de pâte liquide et le séchage de la composition de pâte liquide pour produire une poudre antimicrobienne, dans lequel l'ingrédient hygroscopique est le jus de céleri de culture.
